**Europäisches Patentamt**

**European Patent Office**

**Office européen des brevets**

(19)

(11) Veröffentlichungsnummer: **0 009 544**
**B1**

(12)

# EUROPÄISCHE PATENTSCHRIFT

(45) Veröffentlichungstag der Patentschrift:
27.01.82

(21) Anmeldenummer: **79102305.4**

(22) Anmeldetag: **06.07.79**

(51) Int. Cl.³: **F 16 D 7/04**

(54) **Überlastkupplung.**

(30) Priorität: **04.10.78 DE 2843196**

(43) Veröffentlichungstag der Anmeldung:
**16.04.80 Patentblatt 80/8**

(45) Bekanntmachung des Hinweises auf die Patenterteilung:
**27.01.82 Patentblatt 82/4**

(84) Benannte Vertragsstaaten:
**CH FR GB IT**

(56) Entgegenhaltungen:
**CH-A-425 365**
**DE-C3-2 342 553**
**DE-U-7 725 044**
**US-A-4 004 667**

(73) Patentinhaber: **Ringspann Albrecht Maurer K.G.,**
**Schaberweg 32-34, D-6380 Bad Homburg 1 (DE)**

(72) Erfinder: **Sebulke, Johannes, Dr. Ing.,**
**Ostpreussenstrasse 6, D-6382 Friedrichsdorf (DE)**

(74) Vertreter: **Lemcke, Rupert, Dipl.-Ing. et al, Patentanwälte**
**Dipl.-Ing. R. Lemcke Dr.-Ing. H.J. Brommer**
**Amalienstrasse 28 Postfach 4026,**
**D-7500 Karlsruhe 1 (DE)**

## Überlastsicherung

Die Erfindung bezieht sich auf eine Überlastsicherung mit den Merkmalen des Oberbegriffes von Patentanspruch 1. Eine derartige Überlastsicherung ist durch das deutsche Gebrauchsmuster 7 725 044 bekannt. Dabei erfolgt die Anpressung der beiden Kupplungselemente gegeneinander durch ein Paar gegeneinander angestellte Tellerfedern, die so dimensioniert und vorgespannt sind, daß sie nach einem Federweg, der geringer als die axiale Eingriffstiefe der Kupplungsverzahnung ist, in eine zurückgezogene Stellung umschnappen. Die im Ausrücksinn der Kupplungselemente wirkende Gegenfeder ist ebenfalls als Tellerfeder ausgebildet. Sie wird durch zwei die Federn übergreifende Hülsen verspannt. Ihre Funktion besteht zum einen darin, die Kupplungselemente nach dem Ausrücken auf Distanz zu halten, so daß sie nicht aneinander ratschen können. Im wesentlichen hat sie jedoch die Aufgabe, die wirksame Anpreßkraft zwischen den beiden Kupplungselementen einstellen und verändern zu können. Denn bei Tellerfedern mit Umschnappcharakteristik ist die Anpreßkraft nicht mehr frei wählbar, sondern durch die Verzahnungstiefe, die den Federweg bis zum Umschnappunkt vorgibt, in engen Grenzen festgelegt. Zum Einstellen desjenigen Drehmomentes, bei dem die Überlastsicherung ausrückt, muß daher die Gegenfeder mehr oder weniger verspannt werden. Bei Anpreßfedern ohne Umschnappcharakteristik ist dagegen die Einstellung des maximal übertragbaren Drehmomentes unproblematischer.

Nachteilig ist ferner der kosten- und platzaufwendige Teileaufwand, der für die Verspannung der Gegenfeder notwendig ist.

Hiervon ausgehend, liegt die Aufgabe der vorliegenden Erfindung darin, die bekannte Überlastsicherung dahingehend zu verbessern, daß sie mit geringerem Teile- und Platzbedarf auskommt und durch die überwiegende Verwendung von Serienteilen kostengünstiger herstellbar ist. Ferner soll sich in Weiterbildung der Erfindung die Möglichkeit ergeben, Anpreßfedern ohne Umschnappcharakteristik verwenden zu können.

Diese Aufgabe wird erfindungsgemäß durch die Merkmale im kennzeichnenden Teil von Patentanspruch 1 gelöst. Durch die dort beschriebene Ausbildung der Gegenfeder läßt sich bei minimalem Teileaufwand und Platzbedarf eine im Auskuppelsinn wirkende Axialkraft erzeugen, deren Größe von der Neigung der konischen Gleitfläche abhängt. Sie ist im Mindestfall so groß, daß das axial verschiebbare Kupplungselement bei übergeschnappter Anpreßfeder mit Sicherheit vom anderen Kupplungselement distanziert wird und kein Ratschen auftritt. Sie kann jedoch auch so groß sein, daß die wirksame Anpreßkraft zwischen den Kupplungselementen deutlich reduziert wird.

Als radial-elastische Federringe im Sinne der vorliegenden Erfindung eignen sich insbesondere die im Anspruch 2 enthaltenen, an sich bekannten Sicherungsringe oder Sprengringe.

Für solche Kupplungen, bei denen das axial verschiebbare Kupplungselement auf der an das andere Kupplungselement angeformten Nabe gelagert ist, sind in den Ansprüchen 3 bis 6 vorteilhafte Weiterbildungen angegeben. Selbstverständlich lassen sich aber die radialelastischen Gegenfedern auch bei konstruktiv völlig anders gestalteten Überlastsicherungen verwenden.

Setzt man die konische Gleitfläche gemäß Anspruch 7 aus mehreren axial benachbarten Konusflächen unterschiedlicher Neigung zusammen, wobei deren Neigung gemäß Anspruch 8 in Auskuppelrichtung zunimmt, so bietet sich der Vorteil, daß die Gegenkraft zum Ende des Ausrückvorganges hin zunimmt. Dadurch kann das mit hohem Verschleiß verbundene Tragen der Kupplungselemente an den Zahnspitzen nahezu ganz vermieden werden.

Eine besonders vorteilhafte Weiterbildung des Erfindungsgedankens besteht darin, daß die konische Gleitfläche in einer Stufe mündet. Diese Stufe gewährleistet nicht nur die übliche, auf der Federkraft der Gegenfeder beruhende Distanzierung der Kupplungselemente, sondern eine formschlüssige Trennung. Diese Maßnahme ist vor allem dann vorteilhaft, wenn auch in ausgekuppeltem Zustand noch Axialkräfte auf das axial verschiebbare Kupplungselement einwirken, wie es beispielsweise bei einer Schrägverzahnung der Fall ist. Darüber hinaus bietet diese Maßnahme den Vorteil, daß man nicht mehr auf Anpreßfedern mit Umschnappcharakteristik gemäß Anspruch 10 angewiesen ist, sondern stattdessen auch solche ohne Umschnappcharakteristik verwenden kann, deren wirksame Anpreßkraft einfacher zu verändern ist.

Weitere Einzelheiten und Merkmale der Erfindung ergeben sich aus der nachfolgenden Beschreibung zweier Ausführungsbeispiele; dabei zeigt

Fig. 1 eine erfindungsgemäße Überlastkupplung, die mit umschnappender Tellerfeder arbeitet, im Axialschnitt und

Fig. 2 eine erfindungsgemäße Überlastkupplung, die mit nicht umschnappenden Anpreßfedern arbeitet, im Axialschnitt.

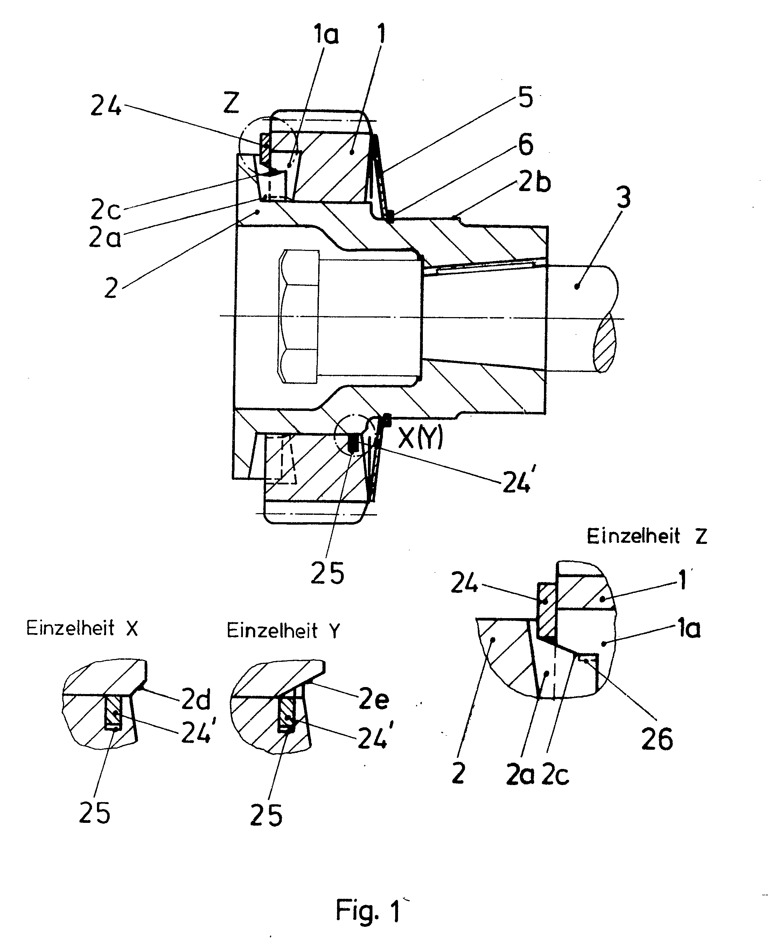

In Fig. 1 sitzt die erfindungsgemäße Überlastkupplung zwischen einem Zahnrad 1 und dessen Nabe 2. Sie kann stattdessen selbstverständlich zwischen vollkommen anders gestalteten, drehmomentübertragenden Elementen angeordnet sein.

Die Nabe 2 ist über eine Paßfederverbindung drehfest an einer Welle 2 festgelegt, die das treibende Element sei. Auf einer zylindrischen Außenfläche der Nabe 2 sitzt ggf. unter Zwischenlage einer Kunststoffbuchse das Zahnrad 1. Es ist verdrehbar und axial verschiebbar auf der Nabe 2 gelagert, wird aber im Betriebszustand durch eine Tellerfeder 5 in formschlüssigem Eingriff mit der Nabe 2 gehalten. Hierzu weist das Zahnrad 1 an seiner linken Stirnfläche, soweit sich diese in Anlage mit einem radial vorspringenden Bund der Nabe 2 befindet, eine Verzahnung 1a auf, die in eine entsprechende Verzahnung 2a der Nabe 2 eingreift. Der Flankenwinkel beider Verzahnungen 1a und 2a ist so gewählt, daß die Übertragung eines Drehmomentes zwischen beiden Verzahnungen eine Axialkraft hervorruft, die im Auskuppelsinn wirksam ist. Zur Drehmomentübertragung zwischen beiden Kupplungselementen bedarf es daher der im Einkuppelsinn wirkenden Anpreßkraft der Tellerfeder 5. Diese stützt sich längs ihrem inneren Umfang an einem in die Nabe 2 eingelassenen Sicherungsring 6 ab. Damit die Tellerfeder 5 mit ihrem äußeren Umfang nicht mit den Zähnen des Zahnrades 1 in Kontakt kommt, ist sie auf einem im Durchmesser reduzierten Bund 2b der Nabe 2 angeordnet.

Wesentlich in Fig. 1 ist der radialelastische Federring in Form eines Seegerringes 24 bzw. 24'. Gemäß der oberen Bildhälfte in Fig. 1 ist der Federring 24 auf einer konischen Gleitfläche 2c verspannt, die am Umfang der Kupplungsverzahnung 2a angebracht ist. Aufgrund seiner Eigenspannung hat der Federring 24 die Tendenz, auf einen geringeren Durchmesser der konischen Gleitfläche 2c zu rutschen, er drückt daher mit seiner rechten Seite gegen die Stirnseite des Zahnrades 1. Übersteigt nun die durch das übertragene Drehmoment zwischen Zahnrad 1 und Nabe 2 erzeugte Axialkraft einen bestimmten Wert, so wird das Zahnrad relativ zur Nabe nach rechts verschoben, wobei die Tellerfeder 5 in eine zurückgezogene Ruhestellung umschnappt. Dieses Umschnappen wird von dem in seine tiefstmögliche Position rutschenden Federring 24 unterstützt. Der dabei zurückgelegte Axialweg ist etwas größer als die Verzahnungstiefe, so daß die Kupplungsverzahnungen nicht mehr miteinander in Berührung kommen können.

Bei dem in der unteren Bildhälfte dargestellten Ausführungsbeispiel sitzt der Federring 24' in einer Nut 25 des Zahnrades 1 und ist dadurch in beiden Axialrichtungen geführt. In Radialrichtung ist er auf der zylindrischen Lagerfläche der Nabe 2 verspannt. An diese zylindrische Lagerfläche schließt sich entweder nach einem kurzen axialen Zwischenstück (Einzelheit X) oder unmittelbar (Einzelheit Y) die konische Gleitfläche 2d bzw. 2e an.

Bei der Ausbildung gemäß Einzelheit X entwickelt der Federring 24' abgesehen von seiner Reibungskraft zunächst keine der Anpressung der Kupplungselemente entgegenwirkende Kraft. Erst gegen Ende des Ausrückvorgangs kommt der Federring an die konische Gleitfläche 2d und unterstützt dann den Ausrückvorgang. Zugleich sichert er die Distanzierung der ausgerückten Kupplungselemente.

Bei der Ausbildung gemäß Einzelheit Y erzeugt der Federring 24' ebenso wie bei der Ausbildung gemäß Einzelheit Z eine permanente Gegenkraft, die aber aufgrund der geringen Neigung der Gleitfläche 2e relativ niedrig ist.

Grundsätzlich kann es zweckmäßig sein, die konische Gleitfläche in einer Stufe 26 mit verringertem Durchmesser auslaufen zu lassen, wie dies gestrichelt in der Einzelheit Z dargestellt ist. Diese Stufe ist so positioniert, daß der Federring in diese einrastet, sobald sich die Kupplungselemente außer Eingriff befinden. Die Stufe gewährleistet somit eine formschlüssige Trennung der Kupplungselemente.

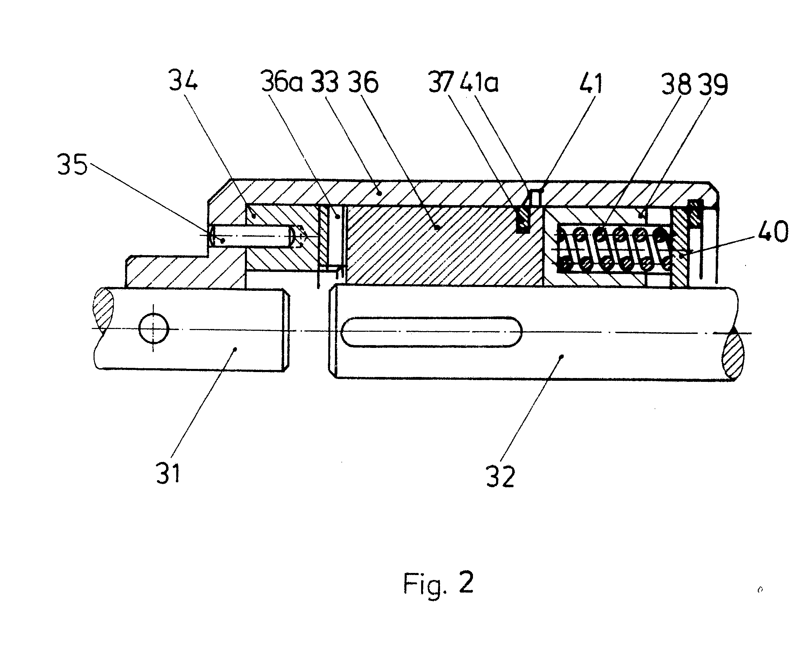

Es liegt im Rahmen der Erfindung, den Federring nicht unmittelbar zwischen den beiden Kupplungselementen zu verspannen, sondern ihn über zusätzliche Teile auf das eine oder andere Kupplungselement wirken zu lassen. Auch besteht die Möglichkeit, den Federring nicht gegenüber einem Innenteil, sondern gegenüber einem Außenteil zu verspannen. Beide Varianten sind in Fig. 2 dargestellt.

Fig. 2 zeigt eine Überlastsicherung zur Verbindung zweier miteinander fluchtender Wellen 31 und 32. Die eine Welle 31 trägt eine mit ihr fest verbundene Hülse 33, die sich radial erweitert und in dieser Erweiterung das eine Kupplungselement in Form eines Zahnkranzes 34 enthält. Der Zahnkranz 34 ist durch mehrere Stifte 35 fest mit der Hülse 33 verbunden. In axialer Verlängerung der Hülse 33 überdeckt diese das andere Kupplungselement in Form eines mit der Welle 32 drehfest, aber axial verschiebbar verbundenen Mitnehmerringes 36. Dieser Mitnehmerring 36 weist an der dem anderen Kupplungselement zugewandten Stirnseite eine entsprechende Verzahnung 36a auf, über die er mit dem Zahnkranz 34 in Eingriff steht. In der äußeren Zylinderwand des Mitnehmerringes 36 sitzt ein in einer Nut geführter, radialelastischer Federring 37, der gegen die zylindrische Innenwand der Hülse 33 verspannt ist. Der Mitnehmerring 36 wird durch mehrere in einem Führungsring 39 sitzende Druckfedern 38 gegen den Zahnkranz 34 gedrückt, wobei sich die Druckfedern 38 ihrerseits an einer mit der Hülse 33 verbundenen Scheibe 40 abstützen. Zwar könnte diese Scheibe 40 auch mit der Welle 32 verbunden sein, doch hat die zeichnerische Anordnung den Vorteil, daß axiale Relativbewegungen der Wellen zueinander keinen Einfluß auf die Ansprechgenauigkeit der Kupplung haben. Die Axialposition der Scheibe 40 ist ebenso wie die des Ringes 6 in Fig. 1 auf die gewünschte Axialkraft entsprechend dem maximal zulässigen Drehmoment angepaßt. Beim Überschreiten dieses Momentes wird der Mitnehmerring 36 aus der Kupplungsverzahnung herausgedrückt, wobei nach einem Teil des Ausrückweges der Federring 37 längs der konischen Gleitfläche 41a in die Nut 41 der Hülse 33 hineinschnappt und so die Anpressung der Druckfedern 38 abfängt.

Besonders zweckmäßig ist es, wenn die Spreizkraft des Federringes 37 in Verbindung mit der konischen Schrägfläche 41a eine Axialkraft erzeugt, die größer als die Anpreßkraft der Druckfedern 38 ist. Dies ist dann ohne weiteres möglich, wenn die Kupplungsverzahnung relativ steile Flanken aufweist, so daß die Kupplungselemente nur mit einer relativ geringen Axialkraft zusammengepreßt werden. Treten relativ hohe Axialkräfte auf, so ist es zur Erhöhung der Gegenkraft zweckmäßig, mehrere Federringe mit zueinander korrespondierenden Gleitflächen parallelzuschalten. Dieses Prinzip ist selbstverständlich auch in Fig. 1 möglich, indem dort die konischen Gleitflächen in Nuten innerhalb der zylindrischen Lagerfläche der Nabe angeordnet werden.

Auch in Fig. 2 kann die konische Gleitfläche 41a in einer Stufe auslaufen, die den eingeschnappten Federring 37 formschlüssig festhält.

Selbstverständlich bestehen für die Ausbildung der Verzahnung der Kupplungselemente diverse Profilierungsmöglichkeiten; es können beispielsweise anstelle eines durchlaufenden Zahnkranzes nur wenige, durch plane Zwischenstücke voneinander getrennte Zähne verwendet werden. Wesentlich ist lediglich, daß die Flankenneigung so gewählt wird, daß die auftretenden Umfangskräfte keinesfalls zur Selbsthemmung gegenüber der axialen Ausrückbewegung führen können.

## Patentansprüche

1. Überlastsicherung in Form einer bei Überschreiten eines bestimmten Drehmomentes ausrückenden, formschlüssigen Kupplung aus zwei koaxial angeordneten und an ihren einander zugewandten Stirnflächen verzahnten Kupplungselementen (1, 2; 33, 34, 36), von denen zumindest das eine (1; 36) axial verschiebbar und durch zumindest eine Anpreßfeder (5, 38) mit dem anderen (2; 33, 34) in Eingriff gehalten ist und wobei eine im Ausrücksinn der Kupplungselemente (1, 2; 33, 34, 36) wirkende Gegenfeder (24, 24'; 37) das Auskuppeln der Kupplungselemente (1, 2; 33, 34, 36) unterstützt, dadurch gekennzeichnet, daß die Gegenfeder ein radialelastischer Federring (24, 24'; 37) ist, der einerseits auf einer konischen Gleitfläche (2c, 2d, 2e; 41a) des einen Kupplungselementes (2; 33, 34) verspannt ist und der sich andererseits axial am anderen Kupplungselement (1; 36) abstützt.

2. Überlastsicherung nach Anspruch 1, dadurch gekennzeichnet, daß die Gegenfeder (24, 24'; 37) ein Sicherungsring oder Sprengring ist.

3. Überlastsicherung nach Anspruch 1 oder 2, wobei das verschiebbare Kupplungselement (1) auf einer an das andere Kupplungselement (2) angeformten Nabe gelagert ist, dadurch gekennzeichnet, daß die konische Gleitfläche (2d, 2e) auf der Nabe (2) angeordnet ist.

4. Überlastsicherung nach Anspruch 3, dadurch gekennzeichnet, daß die konische Gleitfläche (2d, 2e) zwischen einer zylindrischen Lagerfläche der Nabe (2) und einem im Durchmesser reduzierten Bund (2b) angeordnet ist.

5. Überlastsicherung nach Anspruch 3 oder 4, dadurch gekennzeichnet, daß der Federring (24'; 37) in einer Nut (25) des verschiebbaren Kupplungselementes (1; 36) geführt ist.

6. Überlastsicherung nach Anspruch 1 oder 2, dadurch gekennzeichnet, daß die konische Gleitfläche (2c) am Umfang der Kupplungsverzahnung (2a) angeordnet ist und daß sich der Federring (24) an der Stirnseite des anderen Kupplungselementes (1) abstützt.

7. Überlastsicherung nach einem der Ansprüche 1 bis 6, dadurch gekennzeichnet, daß die konische Gleitfläche aus mehreren axial benachbarten Konusflächen unterschiedlicher Neigung zusammengesetzt ist.

8. Überlastsicherung nach Anspruch 7, dadurch gekennzeichnet, daß die Neigung der Konusflächen in Auskuppelrichtung zunimmt.

9. Überlastsicherung nach einem der vorhergehenden Ansprüche, dadurch gekennzeichnet, daß die konische Gleitfläche (2c) in eine Stufe (26) mündet.

10. Überlastsicherung nach einem der vorhergehenden Ansprüche, dadurch gekennzeichnet, daß die Anpreßfeder als Federscheibe (5) ausgebildet und so dimensioniert und vorgespannt ist, daß sie nach einem Federweg, der geringer als die axiale Eingriffstiefe der, Kupplungsverzahnung ist, in eine zurückgezogene Stellung umschnappt.

11. Überlastsicherung nach einem der Ansprüche 1 bis 9, dadurch gekennzeichnet, daß die Anpreßfeder als Druckfeder (38) ohne Umschnappcharakteristik ausgebildet ist.

## Claims

1. Overload safety device in the form of a shapeengaging coupling, disengaging on exceeding of a specific torque, of two coaxially arranged coupling elements (1, 2; 33, 34, 36) toothed on their end faces facing one another, of which at least the one (1; 36) is axially displaceable and held by at least one presser spring (5, 38) in engagement with the other (2; 33, 34), wherein a counter-spring (24, 24'; 37) acting in the disengaging direction of the coupling elements (1, 2; 33, 34, 36) supports the uncoupling of the coupling elements (1, 2; 33, 34, 36), characterised in that the counter-spring is a radially elastic spring ring (24, 24'; 37) which on the one hand is braced on a conical sliding face (2c, 2d, 2e, 41a) of the one coupling element (2; 33, 34) and on the other hand bears axially on the other coupling element (1; 36).

2. Oberload safety device according to Claim 1, characterised in that the counter-spring (24, 24'; 37) is a securing ring or circlip.

3. Oberload safety device according to Claim 1 or 2, wherein the displaceable coupling element (1) is mounted on a hub formed on the other coupling element (2), characterised in that the conical sliding face (2d, 2e) is arranged on the hub (2).

4. Oberload safety device according to Claim 3, characterised in that the conical sliding face (2d, 2e) is arranged between a cylindrical bearing surface of the hub (2) and a collar (2b) of reduced diameter.

5. Oberload safety device according to Claim 3 or 4, characterised in that the spring ring (24'; 37) is guided in a groove (25) of the displaceable coupling element (1; 36).

6. Oberload safety device according to Claim 1 or 2, characterised in that the conical sliding face (2c) is arranged on the circumference of the clutch toothing (2a) and in that the spring ring (24) bears on the end face of the other coupling element (1).

7. Overload safety device according to one of Claims 1 to 6, characterised in that the conical sliding face is composed of a plurality of axially adjacent cone faces of different inclinations.

8. Overload safety device according to Claim 7, characterised in that the inclination of the cone faces increases in the uncoupling direction.

9. Oberload safety device according to one of the preceding Claims, characterised in that the conical sliding face (2c) ends in a step (26).

10. Overload safety device according to one of the preceding Claims, characterised in that the presser spring is formed as a spring washer (5) and so dimensioned and initially stressed that after a spring distance, which is less than the axial depth of engagement of the coupling toothing, it snaps over into a retracted position.

11. Overload safety device according to one of Claims 1 to 9, characterised in that the presser spring is formed as a compression spring (38) without snap-over characteristics.

**Revendications**

1. Dispositif de sécurité contre les surcharges du genre comprenant un accouplement à commande mécanique qui se débraye lors du dépassement d'un couple déterminé, dans lequel cet accouplement est réalisé au moyen de deux éléments de couplage (1, 2; 33, 34, 36) montés de manière coaxiale et munis de dents sur leurs faces frontales tournées l'une vers l'autre, l'un au moins (1; 36) de ces éléments de couplage pouvant se déplacer axialement et étant maintenu en prise avec l'autre (2; 33, 34) au moyen d'au moins un ressort de pression, et dans lequel un contreressort (24, 24'; 37) agissant dans le sens du désaccouplement des éléments de couplage (1, 2; 33, 34, 36) contribue au désaccouplement de ces éléments de couplage (1, 2; 33, 34, 36), caractérisé en ce que le contre-ressort est constitué par an anneau élastique (24, 24'; 37) à élasticité radiale qui, d'une part, est tendu sur une surface de glissement conique (2c, 2d, 2e; 41a) de l'un des éléments de couplage (2; 33, 34) et qui, d'autre part, s'appuie axialement sur l'autre élément de couplage (1; 36).

2. Dispositif de sécurité contre les surcharges selon la revendication 1, caractérisé en ce que le contre-ressort (24, 24'; 37) est un circlip ou un anneau de retenue.

3. Dispositif de sécurité contre les surcharges selon la revendication 1 ou la revendication 2, dans lequel l'élément de couplage déplaçable (1) est monté sur un moyeu ménagé sur l'autre élément de couplage (2), caractérisé en ce que la surface de glissement conique (2d, 2e) est ménagée sur ce moyeu (2).

4. Dispositif de sécurité contre les surcharges selon la revendication 3, caractérisé en ce que la surface de glissement conique (2d, 2e) est ménagée entre une surface portante cylindrique du moyeu (2) et un collet (2b) à diamètre réduit.

5. Dispositif de sécurité contre les surcharges selon la revendication 3 ou la revendication 4, caractérisé en ce que l'anneau élastique (24'; 37) est maintenu en place dans une gorge (25) de l'élément de couplage déplaçable (1; 36).

6. Dispositif de sécurité contre les surcharges selon la revendication 1 ou la revendication 2, caractérisé en ce que la surface de glissement conique (2c) est ménagée à la périphérie de la denture de couplage (2a) et en ce que l'anneau élastique (24) s'appuie sur la face frontale de l'autre élément de couplage (1).

7. Dispositif de sécurité contre les surcharges selon l'une quelconque des revendications 1 à 6, caractérisé en ce que la surface de glissement conique est composée de plusieurs surfaces coniques axialement adjacentes dont l'inclinaison est différente.

8. Dispositif de sécurité contre les surcharges selon la revendication 7, caractérisé en ce que l'inclinaison des surfaces coniques augmente dans le sens qui correspond au désaccouplement.

9. Dispositif de sécurité contre les surcharges selon l'une quelconque des revendications 1 à 8, caractérisé en ce que la surface de glissement conique (2c) est prolongée par un collet (26).

10. Dispositif de sécurité contre les surcharges selon l'une quelconque des revendications 1 à 9, caractérisé en ce que le ressort de pression est réalisé sous la forme d'un ressort en coupelle (5) qui est dimensionné de telle manière et soumis à une tension initiale telle qu'il se renverse en position de retrait après une course qui est inférieure à la profondeur axiale des dentures de couplage permettant l'accouplement.

11. Dispositif de sécurité contre les surcharges selon l'une quelconque des revendications 1 à 9, caractérisé en ce que le ressort de pression est réalisé sous la forme d'un ressort de compression (38) qui ne présente pas de point de retournement.

Einzelheit Z

Einzelheit X

Einzelheit Y

Fig. 1

34 36a 33 36 37 41a 41 38 39

35

40

31 32

Fig. 2

0 009 544